# EUROPEAN PATENT APPLICATION

(11) **EP 4 358 487 A1**
(43) Date of publication of application: **24.04.2024**
(21) Application number: 22836933.6
(22) Date of filing: 06.07.2022
(51) Int. Cl.: H04L 45/243

(54) **CROSS-DEVICE LINK AGGREGATION ROUTING CALCULATION METHOD, SWITCH, SYSTEM, AND STORAGE MEDIUM**

(30) Priority: 07.07.2021 CN 202110767461
(71) Applicant: ZTE Corporation, Shenzhen, Guangdong 518057 (CN)
(72) Inventor: LIN, Ning, Shenzhen, Guangdong 518057 (CN)
(74) Representative: Brunazzi, Stefano
(86) International application number: PCT/CN2022/104015
(87) International publication number: WO 2023/280184

(57) **Abstract**

The embodiments of the present disclosure relate to the field of communication transmission, and in particular, to a multi-chassis link aggregation routing computation method, a switch, a system, and a storage medium. The multi-chassis link aggregation routing computation method is performed by a first switch in a multi-chassis link aggregation switch system, wherein the multi-chassis link aggregation switch system further includes a second switch, the first switch and the second switch are configured with a master Internet Protocol (IP) address representing the multi-chassis link aggregation switch system, the first switch and the second switch are further configured with their respective slave IP addresses, and the method includes: respectively performing routing link establishment between the first switch and the second switch, between the first switch and an upstream gateway device, and between the first switch and a downstream server according to the slave IP addresses; and performing, according to the master IP address, route announcement between the first switch and the server and between the first switch and the upstream gateway device.

## Description

### Cross-Reference to Related Application

This application is based on and claims priority to Chinese Patent Application No. 202110767461.1, filed on July 07, 2021, the disclosure of which is incorporated herein by reference in its entirety.

### Technical Field

Embodiments of the present disclosure relate to the field of communication transmission, and in particular, to a multi-chassis link aggregation routing computation method, a switch, a system, and a storage medium.

### Background

Since a multi-chassis link aggregation switch system is considered to be logically a Layer-2 device in the entire network, the system generally appears as a Layer-2 node. Only an address resolution protocol, i.e., an Address Resolution Protocol (ARP) and Media Access Control (MAC) address lookup and forwarding, is generally performed on the Layer-2 node. In a case where the multi-chassis link aggregation switch system needs to participate in routing protocol computation, the computation capability of the Layer-3 routing protocol needs to be enabled on the multi-chassis link aggregation switch system having two switches, so that the entire system can appear as one Layer-3 node. Some related methods for the multi-chassis link aggregation switch to perform Layer-3 computation are described as follows. In a related method, a routing computation device is added at the upstream of the multi-chassis link aggregation switch, so that the routing computation device completes the routing computation, and then a switch in the multi-chassis link aggregation switch system completes Layer-2 forwarding. In another related method, an additional set of Layer-3 protocol may be installed in the multi-chassis link aggregation switch system, for example, Virtual Router Redundancy Protocol (VRRP) may be used for master/standby protection, or a routing protocol may be directly run to perform path computation to form an Equal Cost Multi-path (ECMP) route.

However, in order to enable the multi-chassis link aggregation switch system to participate in the routing computation, a device needs to be added or another protocol computation mechanism needs to be added, which may bring the following defects. The addition of a network device will increase networking costs. The addition of a set of routing protocols will make an upstream device regard the multi-chassis link aggregation switch system as two independent devices, and in terms of networking mode, this is contradictory to the networking mode in which the multi-chassis link aggregation switch needs to be logically one device. In addition, the above methods cannot apply the link protection and fast switching of the multi-chassis link aggregation switch system, and can only rely on convergence of the routing computation. When a link failure occurs and corresponding protection is needed, there will be serious network delay and packet loss and maintenance will be difficult.

### Summary

The embodiments of the present disclosure provide a multi-chassis link aggregation routing computation method, which is performed by a first switch in a multi-chassis link aggregation switch system. The multi-chassis link aggregation switch system further includes a second switch, the first switch and the second switch are configured with a master Internet Protocol (IP) address representing the multi-chassis link aggregation switch system, and the first switch and the second switch are further configured with their respective slave IP addresses. The method includes: respectively performing routing link establishment between the first switch and the second switch, between the first switch and an upstream gateway device, and between the first switch and a downstream server according to the slave IP addresses; and performing, according to the master IP address, route announcement between the first switch and the server and between the first switch and the upstream gateway device.

The embodiments of the present disclosure provide a switch. The switch is a first switch in a multi-chassis link aggregation switch system, the multi-chassis link aggregation switch system further includes a second switch, the first switch and the second switch are configured with a master Internet Protocol (IP) address representing the multi-chassis link aggregation switch system, and the first switch and the second switch are further configured with their respective slave IP addresses. The switch includes: a link establishment module, configured to respectively perform routing link establishment between the first switch and the second switch, between the first switch and an upstream gateway device, and between the first switch and a downstream server according to the slave IP addresses; and an announcement module, configured to perform, according to the master IP address, route announcement between the first switch and the server and between the first switch and the upstream gateway device.

The embodiments of the present disclosure provide a multi-chassis link aggregation routing computation system, including: a gateway device, a multi-chassis link aggregation switch system in communication connection with the gateway device, and a server in communication connection with the multi-chassis link aggregation switch system; the multi-chassis link aggregation switch system at least includes two switches as mentioned above.

The embodiments of the present disclosure provide a switch, including: at least one processor; and a memory in communication connection with the at least one processor. The memory stores instructions that are able to be executed by the at least one processor, and the instructions, when being executed by the at least one processor, cause the at least one processor to execute the multi-chassis link aggregation routing computation method as mentioned above.

The embodiments of the present disclosure provide a computer-readable storage medium, storing a computer program, wherein the computer program, when being executed by a processor, causes the processor to execute the multi-chassis link aggregation routing computation method as mentioned above.

### Brief Description of the Drawings

Fig. 1 is a flowchart of a multi-chassis link aggregation routing computation method according to an embodiment of the present disclosure;
Fig. 2 is a schematic diagram of a switch according to an embodiment of the present disclosure;
Fig. 3 is a schematic diagram of a multi-chassis link aggregation routing computation system according to an embodiment of the present disclosure;
Fig. 4 is a schematic diagram of a multi-chassis link aggregation routing computation system according to another embodiment of the present disclosure; and
Fig. 5 is a schematic structural diagram of a switch according to an embodiment of the present disclosure.

### Detailed Description

To make the objectives, technical solutions, and advantages of the embodiments of the present disclosure more clear, respective embodiments of the present disclosure are described in detail as follows with reference to the accompanying drawings. However, those having ordinary skill in the art may understand that, in the embodiments of the present disclosure, many technical details are put forward to help a reader understand the present disclosure better. However, even without these technical details and various changes and modifications based on the following embodiments, the claimed technical solutions of the present disclosure can still be implemented. The division of the following embodiments is for convenience of description, and shall not constitute any limitation to exemplary implementations of the present disclosure. The embodiments may be referred to in combination with each other without any contradiction.

The terms "first" and "second" in the embodiments of the present disclosure are only used for the purpose of description, and cannot be understood as indicating or implying relative importance or implicitly indicating the number of indicated technical features. Thus, the features defined by "first" and "second" may explicitly or implicitly include at least one of the features. In the description of the present disclosure, the terms "including " and "having" and any variations thereof are intended to cover a non-exclusive inclusion. For example, a system, product, or device that includes a series of components or units is not limited to the listed components or units, but may optionally include components or units not listed, or may optionally include other components or units inherent to such product or device. In the description of the present disclosure, the meaning of "a plurality of" is at least two, for example, two, three, etc., unless specified otherwise.

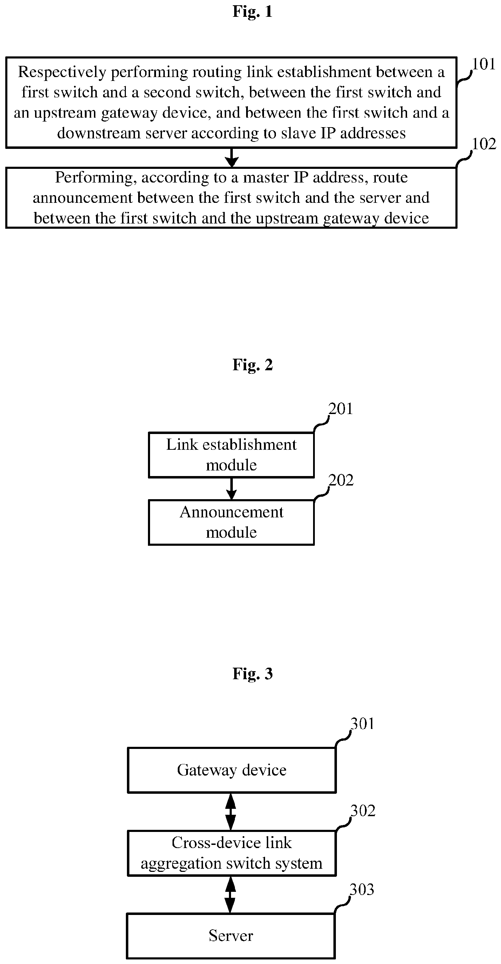

An embodiment of the present disclosure relates to a multi-chassis link aggregation routing computation method, which is performed by a first switch in a multi-chassis link aggregation switch system. The multi-chassis link aggregation switch system further includes a second switch. The first switch and the second switch are configured with a master IP address representing the multi-chassis link aggregation switch system, and the first switch and the second switch are further configured with their respective slave IP addresses. The flow of the multi-chassis link aggregation routing computation method is as shown in Fig. 1, and includes the following operations 101 and 102.

At operation 101, routing link establishment is respectively performed between the first switch and the second switch, between the first switch and an upstream gateway device, and between the first switch and a downstream server according to the slave IP addresses.

At operation 102, route announcement is performed between the first switch and the server and between the first switch and the upstream gateway device according to the master IP address.

In this embodiment, when the multi-chassis link aggregation switch system performs Layer-3 routing protocol computation, the routing protocol computation method on the multi-chassis link aggregation switch system can be completed correctly without the need to add new network devices or break the consistency of the logic of the multi-chassis link aggregation switch. The multi-chassis link aggregation switch system can participate in routing computation, and at the same time improve communication transmission efficiency and reduce the maintenance difficulty. In the multi-chassis link aggregation switch system, when connecting to an upstream device and a downstream device, a master IP address and slave IP addresses need to be configured respectively, wherein the master IP address is announced as a next hop of the announced route during route announcement, and the slave IP addresses are used in routing protocol-based link establishment between two switches, between the switch and an upstream router, and between the switch and a downstream router in the multi-chassis link aggregation switch system. The method can conveniently, quickly and accurately complete routing protocol computation of the multi-chassis link aggregation switch system. Furthermore, the consistency of the logic of the multi-chassis link aggregation switch can be maintained, and various fast protections and switches of the multi-chassis link aggregation switch system can be used, the richness of network networking is greatly improved, the stability and reliability of the network are improved, and the networking cost is saved.

The implementation details of the multi-chassis link aggregation routing computation method according to the embodiment are described in detail below. The following content is only for ease of understanding the provided implementation details and is not essential for implementing the solution.

At operations 101 and 102, routing link establishment is respectively performed between the first switch and the second switch, between the first switch and an upstream gateway device, and between the first switch and a downstream server according to the slave IP addresses.

A routing protocol-based link establishment process needs to be performed before two switches perform routing computation with an upstream device and a downstream device in the multi-chassis link aggregation switch system. When a link is established, in a case where the same master IP address is used to establish the link, a packet for link establishment to a first switch may be balanced to a second switch and therefore a correct packet feedback cannot be received, thereby causing a link establishment failure of the routing protocol computation. However, in this embodiment, each switch in the multi-chassis link aggregation switch system uses its own slave IP address to establish a link with the upstream device and the downstream device, so that the purpose of link establishment can be achieved.

That is, the routing link establishment is performed with the upstream device and the downstream device of each switch by using the slave IP address, thereby improving the completeness of the routing link establishment operation. After the preparation work of the routing computation (that is, the route establishment) is completed, the multi-chassis link aggregation switch system can participate in the routing computation.

At operation 102, route announcement is performed between the first switch and the server and between the first switch and the upstream gateway device according to the master IP address.

In a case where the slave IP addresses of the respective switches are still used in the routing computation, that is to say, in a case where the switches feed back information to the upstream device and the downstream device, pointing to different intermediate nodes corresponding to the respective slave IP addresses (in other words, the switches send route announcements having different contents), the route information would be disordered, which causes a route pointing failure. However, in the present embodiment, after the link establishment is completed, the announcement will be performed by using the master IP address when announcing the route based on the routing protocol. In this case, when the upstream device and the downstream device perform routing computation, the route will only be directed to the master IP address, thereby completing the original link aggregation and protection effect of the multi-chassis link aggregation system. Since the upstream device and the downstream device respectively complete a routing link establishment with the switch, each switch may send to each of the upstream device and the downstream device a routing announcement with the same node, pointing to the same master IP address representing the multi-chassis link aggregation switch system. In this case, the upstream device and the downstream device respectively receive the two route announcement having completely the same content, and therefore the correctness of route pointing will not be affected.

In addition, in a case where the slave IP addresses of the respective switches are still used in the routing computation, that is to say, in a case where the switches in the multi-chassis link aggregation switch system are respectively regarded as independent entities, in some implementations, partial link damage may occur, for example, the multi-chassis link aggregation switching system includes a first switch and a second switch, when the first switch and the second switch are regarded as independent entities respectively participating in the routing computation, in a case where the first switch fails, the system needs to perform complicated processing such as fault query and re-computation on the communication channel involving the first switch. However, in a case where the switches in the multi-chassis link aggregation switch system present the same master IP address, and communication transmission may be performed through either the first switch or the second switch, because the switches present the same master IP address, in a case in which the first switch fails, communication transmission may be performed by using the second switch, and data transmission does not need to be performed again after fault computation and processing are performed. By virtue of the solution, the stability of the multi-chassis link aggregation switch system is greatly increased, and the occupation of computing resources for fault handling is reduced.

In an example, this embodiment is implemented on two switches that make up a multi-chassis link aggregation switch system, the switches including at least a first switch and a second switch. The master IP address and the slave IP address are respectively configured on the Layer-3 interface on which routing computation needs to be performed with an upstream device or a downstream device. The master IP addresses of the Layer-3 interfaces forming the two switches of the multi-chassis link aggregation switch system are the same. When the whole system presents as a routing node to the outside, the system presents as having the same master IP address. As per the slave IP addresses, the slave IP addresses configured for the two switches making up the multi-chassis link aggregation switch system are different, and the slave IP addresses are used for neighbor link establishment between the two switches of the multi-chassis link aggregation switch system and their upstream and downstream devices respectively. In this way, for all the nodes participating in the routing computation, the process of completing link establishment by the multi-chassis link aggregation switch system with an external device can be satisfied. In addition, since the IP addresses involved in routing computation are the same master IP address, the external upstream and downstream devices will not regard the switches in the multi-chassis link aggregation switch system as two independent devices, the switches can still be regarded as a whole system participating in the routing computation, so that the advantage of the integrity of the multi-chassis link aggregation switch system is preserved.

In an example, in a case where there is a single-homing server only connected to the first switch, route announcement is performed with the single-homing server according to a first IP address. The first IP address includes an original IP address of the multi-chassis link aggregation switch system before the multi-chassis link aggregation switch system configures the master IP address and the slave IP addresses, or an IP address which is configured after the multi-chassis link aggregation switch system configures the master IP address and the slave IP addresses. Namely, the original IP address of the multi-chassis link aggregation switch system may serve as the first IP address, and the master IP address and the slave IP addresses may be additionally configured; alternatively, the original IP address of the multi-chassis link aggregation switch system may be used as the master IP address, and the slave IP addresses and the first IP address are additionally configured. That is to say, the method of adopting the master IP address and the slave IP addresses does not affect the process of communication transmission between the multi-chassis link aggregation switch system and the single-homing server. For a single-homing server, only one IP address needs to be configured on the Layer-3 interface between the switch and the single-homing server, for example, only the first IP address is used in routing computation. Because a link is separately established between two switches and between the two switches and their upstream and downstream devices, an accurate route can be correctly computed on the upstream device and the downstream device according to the route announced by the switch to which the single-homing server is connected. In addition, in a case where the routing of the single-homing server is balanced to another switch, this switch may traverse the packet to the switch connected to the single-homing server through a peer link between the two switches, thereby achieving a correct forwarding path.

In another example, in a case where there is a single-homing server only connected to the first switch, route announcement is performed with the single-homing server according to the master IP address. The process of route announcement using the master IP address is substantially the same as the process of route announcement using the first IP address.

That is, in addition to the foregoing embodiment, routing computation may also be implemented with the single-homing server by using the master IP address.

After such processing, for the entire network, the multi-chassis link aggregation switch system is presented as a node from the perspective of external devices, and the upstream device and the downstream device may regard the multi-chassis link aggregation switch system as a device, which is connected to the link aggregation group of the upstream device and the downstream device. During routing computation, the path to the multi-chassis link aggregation switch system only has one master IP address, the protection and load sharing of the forwarding of the whole system are processed by the link aggregation part, and are invisible on the routing computation level, in this way, the complexity of routing computation is greatly simplified under the premise of keeping the load sharing capability and the fast switching protection capability of the multi-chassis link aggregation switch. Furthermore, a routing protocol established based on the slave IP address is also run between the two switches and their upstream and downstream devices, so that the two switches can perform normal routing computation with the upstream and downstream devices respectively, and can correctly process a situation of dual-active nodes and a situation of single-homing nodes. Herein, the processing of a dual-active node refers to the processing under a situation that the server is connected to both switches in the multi-chassis link aggregation switch system, and the processing of a single-homing node refers to the processing under a situation that the server is connected to only one switch in the multi-chassis link aggregation switch system. The technical solution provided in the embodiments of the present disclosure is different from the method in which the routing link establishment and the routing announcement adopt the same IP address in some examples.

In this embodiment, when the multi-chassis link aggregation switch system performs Layer-3 routing protocol computation, the routing protocol computation method on the multi-chassis link aggregation switch system can be completed correctly without the need to add new network devices or break the consistency of the logic of the multi-chassis link aggregation switch. The multi-chassis link aggregation switch system can participate in routing computation, and at the same time improve communication transmission efficiency and reduce the maintenance difficulty. In the multi-chassis link aggregation switch system, when connecting to an upstream device and a downstream device, a master IP address and slave IP addresses need to be configured respectively, wherein the master IP address is announced as a next hop of the announced route during route announcement, and the slave IP addresses are used in routing protocol-based link establishment between two switches, between the switch and an upstream router, and between the switch and a downstream router in the multi-chassis link aggregation switch system. The method can conveniently, quickly and accurately complete routing protocol computation of the multi-chassis link aggregation switch system. Furthermore, the consistency of the logic of the multi-chassis link aggregation switch can be maintained, and various fast protections and switches of the multi-chassis link aggregation switch system can be used, the richness of network networking is greatly improved, the stability and reliability of the network are improved, and the networking cost is saved.

The operation division of the above methods is only for the purpose of clear description, and during implementation, some operations may be combined into one operation or some operations may be divided into a plurality of operations, and all the implementations are within the scope of protection of the present patent as long as they include the same logic relationship. It is also within the scope of protection of the patent to add insignificant modifications to or introduce insignificant designs into the algorithms or flows, but not to change the core design of the algorithms and flows.

An embodiment of the present disclosure is directed to a switch. The switch is a first switch in a multi-chassis link aggregation switch system. The multi-chassis link aggregation switch system further includes a second switch. The first switch and the second switch are configured with a master IP address representing the multi-chassis link aggregation switch system, and the first switch and the second switch are further configured with their respective slave IP addresses. As shown in Fig. 2, the switch includes:
a link establishment module 201, configured to respectively perform routing link establishment between the first switch and the second switch, between the first switch and an upstream gateway device, and between the first switch and a downstream server according to the slave IP addresses; and
an announcement module 202, configured to perform, according to the master IP address, route announcement between the first switch and the server and between the first switch and the upstream gateway device.

The announcement module 202 is configured to, in a case where there is a single-homing server only connected to the first switch, perform route announcement with the single-homing server according to the master IP address; or in a case where there is a single-homing server only connected to the first switch, perform route announcement with the single-homing server according to a first IP address. The first IP address includes an original IP address of the multi-chassis link aggregation switch system before the multi-chassis link aggregation switch system configures the master IP address and the slave IP addresses, or an IP address which is configured after the multi-chassis link aggregation switch system configures the master IP address and the slave IP addresses.

In this embodiment, when the multi-chassis link aggregation switch system performs Layer-3 routing protocol computation, the routing protocol computation method on the multi-chassis link aggregation switch system can be completed correctly without the need to add new network devices or break the consistency of the logic of the multi-chassis link aggregation switch. The multi-chassis link aggregation switch system can participate in routing computation, and at the same time improve communication transmission efficiency and reduce the maintenance difficulty. In the multi-chassis link aggregation switch system, when connecting to an upstream device and a downstream device, a master IP address and slave IP addresses need to be configured respectively, wherein the master IP address is announced as a next hop of the announced route during route announcement, and the slave IP addresses are used in routing protocol-based link establishment between two switches, between the switch and an upstream router, and between the switch and a downstream router in the multi-chassis link aggregation switch system. The method can conveniently, quickly and accurately complete routing protocol computation of the multi-chassis link aggregation switch system. Furthermore, the consistency of the logic of the multi-chassis link aggregation switch can be maintained, and various fast protections and switches of the multi-chassis link aggregation switch system can be used, the richness of network networking is greatly improved, the stability and reliability of the network are improved, and the networking cost is saved.

It is not difficult to find that the present embodiment is a system embodiment corresponding to the above embodiment, and the present embodiment may be implemented in cooperation with the above embodiment. Related technical details mentioned in the foregoing embodiments are still applicable in this embodiment, and are not described herein again to reduce repetition. Accordingly, the related art details mentioned in the present embodiment are also applicable in the described embodiments.

It is worth mentioning that each module involved in the present embodiment is a logic module. In a practical application, one logic unit may be one physical unit, may also be a part of one physical unit, and may also be implemented by using a combination of a plurality of physical units. In addition, in order to highlight the inventive part of the present disclosure, the present embodiment does not introduce units less closely related to solving the technical problem proposed in the present disclosure, but this does not mean that other units are not present in the present embodiment.

An embodiment of the present disclosure relates to a multi-chassis link aggregation routing computation system. As shown in Fig. 3, the multi-chassis link aggregation routing computation system includes: a gateway device 301, a multi-chassis link aggregation switch system 302 in communication connection with the gateway device 301, and a server 303 in communication connection with the multi-chassis link aggregation switch system 302.

The multi-chassis link aggregation switch system 302 includes at least two switches as described above.

Specifically, the switch in the multi-chassis link aggregation switch system configures a master IP address and slave IP addresses on Layer-3 interface addresses of the uplink and downlink, wherein the same Layer-3 interface master IP address is configured for the two switches, and different Layer-3 interface slave IP addresses are configured for the two switches. The two switches respectively use their own slave IP addresses for routing protocol link establishment, and the link establishment between the two switches and between the two switches and their upstream and downstream devices is performed by using the slave IP addresses. The upstream device and the downstream device may respectively form two pairs of route neighbors with the two switches of the multi-chassis link aggregation switch system. The upstream device and the downstream device may be, for example, an upstream gateway device and a downstream server.

The two switches of the multi-chassis link aggregation switch system perform route announcement respectively. A dual-active node uses a master IP address of a Layer-3 interface to perform route announcement; and a single-homing node uses a first IP address of the Layer-3 interface to perform route announcement. The first IP address may be an original IP address of the multi-chassis link aggregation switch system, and may alternatively be additionally configured IP address. The routing computation of the multi-chassis link aggregation switch system may be implemented in the following manner: routing nodes in the upstream and downstream devices receive route announcements sent by the two switches of the multi-chassis link aggregation switch system, and perform computation according to a routing protocol. A next hop IP address of a route of a dual-active node (namely, in a case in which communication connection exists between at least two switches in the multi-chassis link aggregation switch system and the downstream device) points to the master IP address of the Layer-3 interface of the multi-chassis link aggregation switch system, and an egress is an aggregation link group of a communication link between the upstream device and the downstream device. A next hop of a route of a single-homing node (namely, in a case in which a communication connection exists between only one switch in the multi-chassis link aggregation switch system and the downstream device) points to a first IP address of the Layer-3 interface of the multi-chassis link aggregation switch system, and an egress is an aggregation link group of the communication link between the upstream device and the downstream device.

In this embodiment, in the multi-chassis link aggregation switch system, when connecting to an upstream device and a downstream device, the Layer-3 interface needs to be configured with a master IP address and a slave IP address, wherein the master IP address is used for route announcement, as a next hop of an announced route, the slave IP address is used in the routing protocol link establishment between two switches and between the two switches and their upstream and downstream routers in the multi-chassis link aggregation switch system. In this way, when the upstream device and the downstream device perform routing computation, the whole multi-chassis link aggregation switch system is regarded as one device, and the next hop of the route passing through this node is the master IP address of the Layer-3 interface of the multi-chassis link aggregation switch system. When a link failure occurs in the multi-chassis link aggregation switch system and protection switching needs to be performed, the entire multi-chassis link aggregation switch system can also perform fast switching according to the mode of multi-chassis link aggregation, and the entire process is not perceivable for the aspect of routing computation.

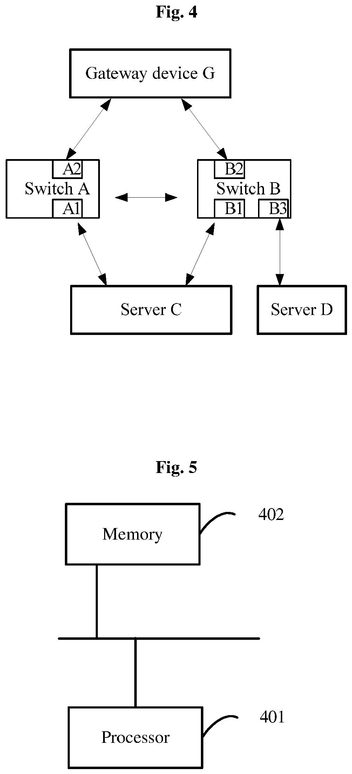

For ease of understanding, an example is given below with reference to in Fig. 4.

For example, switches A and B constitute a dual-active multi-chassis link aggregation switch system, in which switch A is a master device, port A1 of switch A and port B1 of switch B constitute a multi-chassis aggregation link which is connected to server C, a master link C1 of server C is connected to port A1 of switch A, and link C2 is connected to port B1 of switch B. The uplink A2 of switch A and the uplink B2 of switch B are connected to gateway device G. For a Layer-3 interface, connected to the server, of the multi-chassis aggregation link composed of switches A and B, it is configured on switch A that the master IP address of the Layer-3 interface is 10.10.10.1 and the slave IP address of the Layer-3 interface is 10.10.10.2; and it is configured on switch B that the master IP address of the Layer-3 interface is 10.10.10.1 and the slave IP address of the Layer-3 interface is 10.10.10.3. The port B3 on switch B is connected to a single-homing server D, and the first IP address of the Layer-3 interface is configured as 20.20.20.1.

An Open Shortest Path First (OSPF) routing protocol relationship is established between switches A and B, and server C. It should be understood that, the routing protocol is not limited to this OSPF protocol during practical application. An OSPF routing protocol relationship is established between switches A and B and server C in pairs (i.e., between switch A and server C, and between switch B and server C). In the establishment process, switch A uses the IP address 10.10.10.2, and switch B uses the IP address 10.10.10.3; the OSPF neighbors on switch A are switch B and server C; the OSPF neighbors on switch B are switch A and server C; and OSPF neighbors on server C are switches A and B. The switches A and B announce, to server C, a route towards gateway G, and server C conducts routing computation. The switches A and B respectively announce, to server C, a route towards gateway G to notify server C that the next hop of the route towards gateway G is 10.10.10.1 (the route announcements received by the server from the switches A and B are the same, and both route announcements indicate that the next hop points to 10.10.10.1, therefore the routing computation at the server is not affected). After receiving the route announcement, server C writes the route towards gateway G into a route table, and the next-hop IP address points to 10.10.10.1. Through ARP learning, server C knows that the egress towards 10.10.10.1 points to the dual-active aggregate link port of server C. When forwarding a layer 3 packet that needs to go to gateway G, server C can directly forward the packet to the link aggregation port, and the load is balanced to switch A or switch B. Since both switches A and B have a route towards gateway G, the traffic can reach gateway G correctly.

The route announcement of switch B to server D and the route computation on the single-homing server D will be introduced as follows. For example, switch B respectively announces, to server D, a route towards gateway G, and notifies server C that the next hop of the route towards gateway G is 20.20.20.1. After receiving the route announcement, server D writes the route towards gateway G into a routing table, and the IP address of the next hop points to 20.20.20.1. Through ARP learning, server D learns that the egress to 20.20.20.1 points to the connection interface between server D and switch B. When forwarding a Layer-3 packet that needs to go to gateway G, server D may directly point to the connection interface between server D and switch B, and send the packet to switch B, so that switch B correctly sends the traffic to gateway G.

Compared with related method for computing the multi-chassis link aggregation routing protocol, it is only necessary to configure the master and slave IP addresses at the Layer-3 interface of the multi-chassis link aggregation switch system, where the master IP address is used for route announcement of the dual-active node, and the slave IP address is used for the routing protocol link establishment of the whole network. In this way, the whole multi-chassis link aggregation switch system can be used as a whole to perform route computation, and at the same time, the computation needs of the dual-active node and the computation needs of the single-homing node may be satisfied. In addition, various switching and protection of the whole multi-chassis link aggregation switch system will not be affected, and during switching and protection, the route will not perceive the change. The application of the method greatly simplifies the routing protocol computation process of the multi-chassis link aggregation switch system, greatly improves the richness of network networking, improves the stability and reliability of the network, and saves the networking cost.

An embodiment of the present disclosure relates to a switch. As shown in Fig. 5, the switch includes: at least one processor 401; and
a memory 402 in communication connection with the at least one processor 401.

The memory 402 stores instructions that are able to be executed by the at least one processor 401, where the instructions, when being executed by the at least one processor 401, cause the at least one processor 401 to execute the foregoing multi-chassis link aggregation routing computation method.

The memory 402 and the at least one processor 401 may be connected via a bus. The bus may include any number of interconnected buses and bridges, and the bus connects various circuits of the at least one processor 401 and the memory 402. The bus may also connect a variety of other circuits, such as peripheral devices, voltage regulators, and power management circuitry, which are well known in the art and therefore are not described further herein. The bus interface provides an interface between the bus and the transceiver. A transceiver may be one element or multiple elements, such as multiple receivers and transmitters, that provide a means for communicating with various other devices over a transmission medium. Data processed by the at least one processor 401 is transmitted on a wireless medium through an antenna, and further, the antenna receives the data and transmits the data to the at least one processor 401.

The at least one processor 401 is responsible for managing a bus and general processing, and may further provide various functions, including timing, peripheral interfaces, voltage regulation, power management, and other control functions. The memory 402 may be used to store data used by the at least one processor 401 in performing operations.

An embodiment of the present disclosure relates to a computer-readable storage medium, which stores a computer program. The computer program implements the foregoing method embodiments when being executed by a processor.

That is, those having ordinary skill in the art may understand that all or a part of the operations of the methods in the foregoing embodiments may be implemented by a program instructing relevant hardware. The program is stored in a storage medium and includes several instructions for instructing a device (which may be a single chip, a chip, or the like) or a processor to execute all or a part of the operations of the methods in the embodiments of the present disclosure. The foregoing storage medium includes: any medium that can store program codes, such as a Universal Serial Bus (USB) flash disk, a removable hard disk, a Read-Only Memory (ROM), a Random Access Memory (RAM), a magnetic disk, or an optical disk.

Those having ordinary skill in the art may understand that the foregoing embodiments are exemplary embodiments for implementing the present disclosure, and in practical applications, various changes may be made in form and details without departing from the principle and scope of the present disclosure.

## Claims

1. A multi-chassis link aggregation routing computation method, which is performed by a first switch in a multi-chassis link aggregation switch system, wherein the multi-chassis link aggregation switch system further comprises a second switch, the first switch and the second switch are configured with a master Internet Protocol, IP, address representing the multi-chassis link aggregation switch system, the first switch and the second switch are further configured with their respective slave IP addresses, and the method comprises:
respectively performing routing link establishment between the first switch and the second switch, between the first switch and an upstream gateway device, and between the first switch and a downstream server according to the slave IP addresses; and
performing, according to the master IP address, route announcement between the first switch and the server and between the first switch and the upstream gateway device.

2. The multi-chassis link aggregation routing computation method according to claim 1, further comprising:
in a case where there is a single-homing server only connected to the first switch, performing route announcement with the single-homing server according to a first IP address;
wherein the first IP address comprises an original IP address of the multi-chassis link aggregation switch system before the multi-chassis link aggregation switch system configures the master IP address and the slave IP addresses, or an IP address which is configured after the multi-chassis link aggregation switch system configures the master IP address and the slave IP addresses.

3. The multi-chassis link aggregation routing computation method according to claim 1 or 2, further comprising:
in a case where there is a single-homing server only connected to the first switch, performing route announcement with the single-homing server according to the master IP address.

4. A switch, wherein the switch is a first switch in a multi-chassis link aggregation switch system, the multi-chassis link aggregation switch system further comprises a second switch, the first switch and the second switch are configured with a master Internet Protocol, IP, address representing the multi-chassis link aggregation switch system, the first switch and the second switch are further configured with their respective slave IP addresses, and the switch comprises:
a link establishment module, configured to respectively perform routing link establishment between the first switch and the second switch, between the first switch and an upstream gateway device, and between the first switch and a downstream server according to the slave IP addresses; and
an announcement module, configured to perform, according to the master IP address, route announcement between the first switch and the server and between the first switch and the upstream gateway device.

5. A multi-chassis link aggregation routing computation system, comprising: a gateway device, a multi-chassis link aggregation switch system in communication connection with the gateway device, and a server in communication connection with the multi-chassis link aggregation switch system,
wherein the multi-chassis link aggregation switch system at least comprises two switches according to claim 4.

6. A switch, comprising:
at least one processor; and
a memory in communication connection with the at least one processor, wherein
the memory stores instructions that are able to be executed by the at least one processor, and the instructions, when being executed by the at least one processor, cause the at least one processor to execute the multi-chassis link aggregation routing computation method according to any one of claims 1 to 3.

7. A computer-readable storage medium, storing a computer program, wherein the computer program, when being executed by a processor, causes the processor to execute the multi-chassis link aggregation routing computation method according to any one of claims 1 to 3.
